# EUROPEAN PATENT APPLICATION

(11) **EP 4 838 114 A1**
(43) Date of publication of application: **11.11.2026**
(21) Application number: 25461522.2
(22) Date of filing: 05.05.2025
(51) Int. Cl.: F16H 49/00

(54) **MULTIPLE OUTPUT STRAIN WAVE DRIVE**

(71) Applicant: Goodrich Actuation Systems Limited, Wolverhampton WV10 7EH (GB)
(72) Inventor: CHMIELEWSKI, Pawe Aleksander, 51-317 Wroclaw (PL); DARBY, Jonathan Alan, Newcastle, ST5 2HB (GB); TUREK, Lukasz, 51-317 Wroclaw (PL)
(74) Representative: Casalonga

(57) **Abstract**

A balanced multi-slice actuator strain wave drive comprising: an elliptical wave generator shaft (100) having an elliptical cross-sectional shape and rotatable about an axis (X); a ring gear assembly (200a, 200b, 300a, 300b, 300c) mounted around the wave generator shaft, the ring gear assembly comprising a plurality of output ring gears (200a, 200b) each having a circular inner periphery and being sandwiched between two earth rings (300a, 300b, 300c) each having a circular inner periphery; for each of the plurality of output ring gears, a flex spline (500) mounted around the wave generator shaft between the wave generator shaft and a respective output ring gear.

## Description

### TECHNICAL FIELD

The present invention relates to a strain wave drive particularly a strain wave drive for a multi-slice actuator for rotary actuation of flight control surfaces of an aircraft.

### BACKGROUND

Rotary actuation of devices or surfaces e.g. flight control surfaces in an aircraft, requires high torque drive and so typically requires gearing between the electric motor, which is typically high speed, low torque, and the output shaft of the actuator that drives the surface.

Multi-slice actuator configurations have been developed, which provide more than one output. Such multi-slice actuator configurations allow for an overall higher output torque while maintaining a compact design which makes them useful, for example, in thinner wing aircraft. Such actuator can be used in thinner wing aircraft to actuate e.g. wing flaps, whilst being compact enough to remain within the thin wing envelope. These configurations also require gearing between the motor and the multiple outputs.

Conventional involute or pinion-type gears, comprising a number of intermeshing toothed wheels to create the required gear ratio, are relatively large and heavy and the higher the required ratio, the more gears and, thus, the greater the size and weight of the overall actuator system. Further, such gears are inherently torsionally stiff and exhibit backlash wind-up which creates an uneven load share between the actuator slices. Because of this, the actuator drive needs to be designed assuming that more load is carried at one or more slices, and so the configurations are oversized to cater for such eventuality. This can lead to increased backlash, skew, drag and wear within the gearing and the overall system.

**In** aircraft in particular, and also in other applications, there is a need to minimise the size and weight of components and there is a desire to provide a gear or drive that can provide the required torque ratio using a smaller, lighter, more compact arrangement.

A known type of gear mechanism that is particularly compact is the strain wave drive or gear. Strain wave gearing, also known as a harmonic drive, is used in many drive trains as it is compact and lightweight and can be used to provide a high gear ratio between an input or drive shaft and an output shaft. These properties make strain wave gearing suited to use in aircraft and other vehicles where space is limited and weight of components should be minimised, whilst maintaining reliability and performance.

A strain wave gear system includes a wave generator in the form of an elliptical shaft. A flexible toothed ring (flex spline) is mounted on a compliant bearing that runs on the wave generator and both engages with, and conforms to, the shape of the wave generator. A fixed outer ring (circular spline) is positioned around the flex spline and has inner teeth that engage with the outer teeth of the flex spline. However, due to the elliptical shape of the wave generator, the flex spline only engages with the teeth of the outer ring at its major diameter

In operation, a drive shaft, connected to the wave generator, is rotated e.g. by a motor, which causes rotation of the wave generator. The bearing conforms to the elliptical shape of the wave generator. The flex spline conforms to the shape of the wave generator and as it rotates, the flex spline will only engage with the inner teeth of the outer ring at the major axes of the ellipse. The circular spline has a different number of inner teeth to the number of outer teeth of the flex spline. Rotation of the drive shaft thus causes a slower rotation of the output shaft by its engagement with the flex spline. The output shaft is connected to the device or surface to be moved by the actuator.

A problem with using strain wave drives for multi-slice actuators (i.e. to provide more than one output), though, is that the spline drive teeth have relatively reduced compliance and so are more susceptible to skew, backlash and uneven loading compared to convention pinion geared actuators. Known strain wave drives have to be designed with built-in compliance (as discussed below) to ensure correct load distribution and engagement of the teeth. This adds to the costs and complexity of such gears for use in e.g. flight control rotary actuation.

There is, therefore, a desire for an improved strain wave drive that retains the benefits of compactness and light weight whilst overcoming problems associated with existing strain wave drives, and that can be effectively used for multi-slice actuator configurations.

### SUMMARY

The present invention uses, for the first time, a balanced strain wave drive to provide a balanced multi-slice actuator.

According to the invention, there is provided a balanced multi-slice actuator strain wave drive comprising: an elliptical wave generator shaft having an elliptical cross-sectional shape and rotatable about an axis; a ring gear assembly mounted around the wave generator shaft, the ring gear assembly comprising a plurality of output ring gears each having a circular inner periphery and being sandwiched between two earth rings each having a circular inner periphery; for each of the plurality of output ring gears, a flex spline mounted around the wave generator shaft between the wave generator shaft and a respective output ring gear.

The strain wave drive of this invention has a completely balanced configuration.

### BRIEF DESCRIPTION

Embodiments of the strain wave drive according to the invention will now be described with reference to the drawings. It should be noted that these are embodiments only and variations are possible within the scope of the claims.
Figure 1 shows a cross-section through a known type of strain wave drive.
Figure 2 shows a cross-section through an example of a strain wave drive in accordance with the present invention.

### DETAILED DESCRIPTION

As mentioned above, conventional drives for moving e.g. flight control surfaces in aircraft, have used a series of inter-meshing gear wheels. In an attempt to reduce the overall size and weight of the gearing, thought has been given to the use of the more compact strain wave gears or drives (also known as harmonic drives). Such strain wave drives essentially consist of three main parts: a wave generator, driven by the motor drive shaft, is an elliptical shaft having bearings arranged around the outer perimeter thereof. The wave generator is located within a cylindrical flex spline which is a flexible annular component having radially outwardly extending teeth. The flex spline is sufficiently flexible to take up the elliptical shape of the wave generator as the wave generator and its bearings rotate within the flex spline. A rigid circular spline is a ring that fits around the flex spline. The circular spline has inwardly extending teeth. The circular spline is typically fixed e.g. to the actuator housing. As the wave generator is rotated by the motor, it causes the flex spline to take up the elliptical shape such that the outwardly extending teeth of the flex spline mesh with the inwardly extending teeth of the circular spline at the locations of the major axis of the ellipse. The circular spline typically has more teeth than the flex spline such that as the teeth engage, the flex spline is caused to rotate relative to the circular spline at a rate of rotation different to that of the motor. The output ring gear is provided with inner teeth that engage with the teeth of the flex spline. As the flex spline deforms due to rotation of the wave generator inside it, its teeth engage with the inwardly protruding teeth of the output ring and, due to the elliptical movement of the point of engagement, this causes the output ring gear to rotate according to the gear ratio. The output ring gear is connected with a part or component to be moved by the drive.

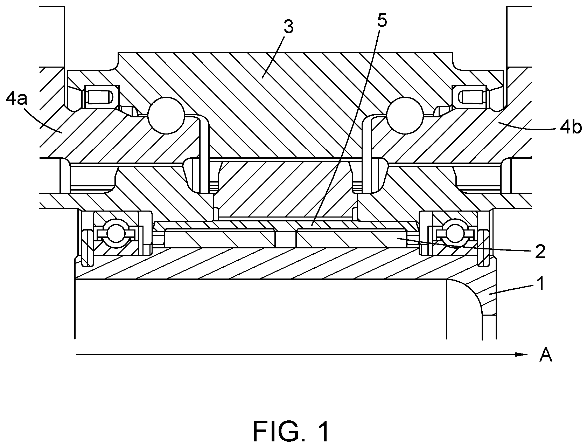

There has recently been proposed, in EP 4390178 A, a balanced strain wave drive using a straight flex spline (i.e. a tube-shaped flex spline) without flanges, together with two different ring gears (circular splines) using a design similar to known flat (FR) type harmonic drives. An example of such a balanced strain wave drive is shown in Fig. 1, showing the wave generator 1, rotatable about axis A. Needle bearings 2 are provided around the perimeter of the wave generator 1. The flex spline 5 is fitted around the wave generator to engage with the bearings to take up the elliptical shape of the wave generator. The strain wave gear has an output ring gear 3 and two earth gears 4a, 4b arranged either side of the output ring gear, such that the output ring gear is sandwiched between the two earth gears.

Because of the balanced sandwich design with the earth gears on both sides of the output gear and, therefore, the flex spline 5, no coning effect occurs. **It** is not, therefore, necessary to provide compliance in the other components of the drive such as the bearings or the shaft to compensate for such coning. No skewing occurs and no flanges are needed to fix the flex spline.

The inventors have considered how the advantages of the balanced sandwich design could be leveraged to be advantageously used in a multi-slice actuator configuration - i.e. an actuator configuration providing multiple outputs.

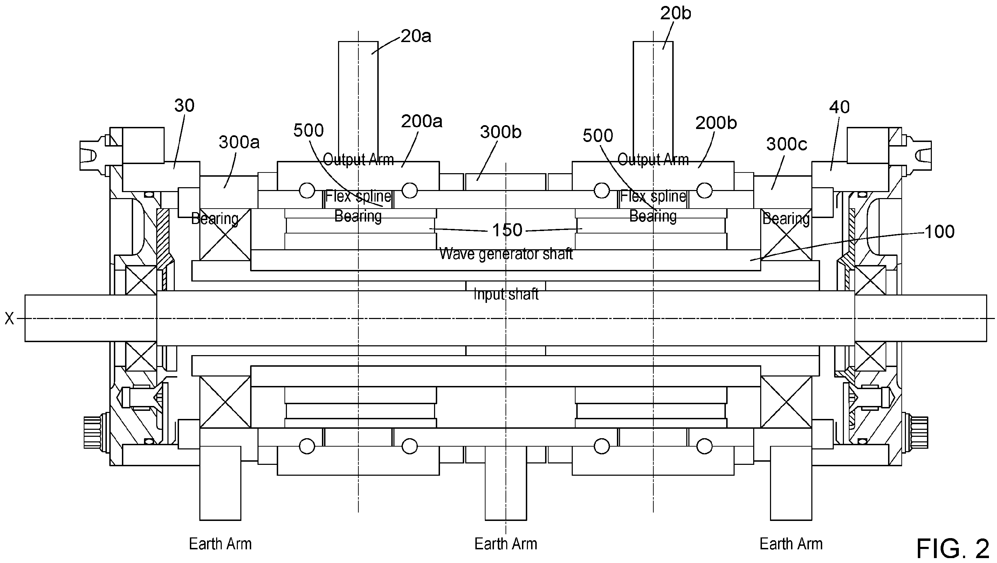

Fig. 2 shows an example of a strain wave drive according to this invention, that combines the advantages of the balanced sandwich design strain wave drive mentioned above with a multi-slice actuator design.

The strain wave gear has two output ring gears 200a, 200b and three earth rings (300a, 300b, 300c), one earth ring arranged on each side of the output ring gears, such that each output ring gear is sandwiched between two earth rings. As shown in Fig. 2, a first output ring gear 200a is sandwiched between first, 300a, and second, 300b, earth rings, and a second output ring gear 200b is sandwiched between the second, 300b, and a third, 300c, earth ring. Additional output ring gears could be provided sandwiched between respective additional earth rings if required for more outputs.

The elliptical wave generator 100 is a shaft, rotatable about an axis X. Flex splines 500, one for each output ring gear, around mounted around the wave generator 100. In the example shown, each flex spline 500 is a tubular sleeve component. Alternatively, the flex splines could be cup-shaped flex splines. Mounted around each flex spline is a sandwich arrangement of the output ring gear between the earth rings.

The earth rings are provided with flanges 30, 40 to be mounted to a fixed, earthing part or surface. The output ring gears 200a, 200b are rotatable relative to the earth rings according to the gear ratio provided by the different numbers of teeth. The output ring gear 200s are also provided with a flange 20a, 20b for attachment to the movable part e.g. flight control surface.

In an example, the output ring gears 200a, 200b may have two teeth more that the respective flex spline 500 and this provides the gear ratio. The earth rings 300a, 300b, 300c, may each have the same number of teeth as the flex splines such that the flex splines cannot rotate relative to the earth rings.

The wave generator 100, as is known, is rotatable about axis X, the wave generator is elliptical and has rollers e.g. needle rollers 150 around its periphery. The flex spline 500 takes the elliptical shape of the wave generator and therefore engages with the teeth on the output gear 200 at the points of the ellipse major axis. Because the output rings gears have more (e.g. two more) teeth than the flex splines, there is relative movement in the rotational direction between each flex spline and the respective output gear - i.e. the output ring gear rotates. The flex splines have the same number of teeth as the earth gears and so there is no relative movement.

As the elliptical wave generator rotates, the outer sections of the flex splines are secured by the earth rings and, at the major diameter of the ellipse, the middle section of the flex spline is deformed to take up the elliptical shape and its teeth, in that section, mesh with the teeth of the respective output ring gear causing it to rotate.

With this design, the flex spline 500 can be deformed along its whole length providing an even load share distribution across the intermeshing spline teeth which eliminates any coning effect. Further, because only the engaging part of the flex spline is being deflected, it does not need to be very long to provide compliance and so the design is very compact.

Because of the balanced design with the earth gears on both sides of the output gear and, therefore, the flex spline, no coning effect occurs. **It** is not, therefore, necessary to provide compliance in the other components of the drive such as the bearings or the shaft to compensate for such coning. No skewing occurs and no flanges are needed to fix the flex spline. Furthermore, by having multiple balanced outputs, the strain wave drive can drive a multi-slice actuator with even load sharing between the multiple outputs. The balanced design eliminates any uneven load distribution by incorporating the one-piece, through-shaft wave generator with a central drive and the balanced sandwich configuration. Any torsional stiffness imbalance and backlash wind-up that leads to uneven load sharing between the output slices is eliminated with this design. The compact design of the strain wave drive is simpler, more cost-effective to manufacture and assemble and, with fewer parts overall reliability is improved.

## Claims

1. A multi-slice actuator strain wave drive comprising:
an elliptical wave generator shaft (100) having an elliptical cross-sectional shape and rotatable about an axis (X);
a ring gear assembly (200a, 200b, 300a, 300b, 300c) mounted around the wave generator shaft, the ring gear assembly comprising a plurality of output ring gears (200a, 200b) each having a circular inner periphery and being sandwiched between two earth rings (300a, 300b, 300c) each having a circular inner periphery;
for each of the plurality of output ring gears, a flex spline (500) mounted around the wave generator shaft between the wave generator shaft and a respective output ring gear.

2. The multi-slice actuator strain wave drive of claim 1, wherein each flex spline has a first number of radially outwardly extending teeth around its outer periphery; and
wherein each earth ring (300a, 300b) has the first number of radially inwardly extending teeth engaging with the teeth of a respective flex spline; and
wherein each output ring gear has a second number of radially inwardly extending teeth, **characterised in that** the second number is greater than the first number, such that as the wave generator shaft rotates, it causes the flex splines to take up the elliptical shape of the wave generator shaft and the teeth of the flex splines engage with teeth of the respective output ring gear at the major diameter of the ellipse, causing the output ring gear to rotate.

3. The multi-slice actuator strain wave drive of claim 2, wherein the second number is two more than the first number.

4. The multi-slice actuator strain wave drive of claim 2, wherein the second number is three more than the first number.

5. The multi-slice actuator strain wave drive of any preceding claim, further comprising bearings (150) between the wave generator shaft (100) and the flex spline (500).

6. The multi-slice actuator strain wave of claim 5, wherein the bearings (150) are needle roller bearings.

7. The multi-slice actuator strain wave drive of any preceding claim, wherein the earth rings (300a, 300b, 300c) are provided with attachment flanges (30, 40).

8. The multi-slice actuator strain wave drive of claim 7, wherein each output ring gear (200a, 200b) is provided with an attachment flange (20).

9. The multi-slice actuator strain wave drive of any preceding claim, having three earth rings and two output ring gears each sandwiched between an adjacent pair of earth rings.

10. The multi-slice actuator strain wave drive of any preceding claim, wherein the flex splines are flexible tubular splines.

11. The multi-slice actuator strain wave drive of any of claims 1 to 9, wherein the flex splines are flexible cup-shaped splines.
